# EUROPEAN PATENT APPLICATION

(11) **EP 2 114 033 A1**
(43) Date of publication of application: **04.11.2009**
(21) Application number: 08290411.1
(22) Date of filing: 29.04.2008
(51) Int. Cl.: H04L 12/24, H04W 24/10

(54) **Method for facilitating the analysis of a network event report in a communication network**

(71) Applicant: Alcatel Lucent, 75008 Paris (FR)
(72) Inventor: Casalis, Jean-Yves, 94260 Fresnes (FR); De Mathan, Béatrix, 74016 Paris (FR); Brethereau, Alain, 78220 Viroflay (FR); Houllier, Jean-Roch, 91240 Saint-Michel sur Orge (FR)
(74) Representative: Croonenbroek, Thomas Jakob

(57) **Abstract**

The present invention relates to a method for facilitating the analysis of a network event report in a communication network **characterized in that** said method comprising the steps of:
-detecting an occurrence of said network event,
in response to an occurrence of said network event,
-determining additional information useful to determine network event origin,
-adding said useful additional information in said report.

## Description

### BACKGROUND OF THE INVENTION

The present invention relates to the field of communication networks. Building and operating costs of such networks are very high. Besides, the Quality of Service (QoS) level needs always to be improved due to market pressure. It is therefore essential to provide the best Quality of Service (QoS) while ensuring the profitability of the network. To improve the quality of service (QoS), it is essential to detect and analyze communication problems in order to prevent them from occurring again and to correct them. Due to the high number and the variety of factors influencing the Quality of Service (QoS) of a network, the analysis of said QoS is very complex and time consuming. Thus the present invention offers to reduce the complexity and the time spent to analyze QoS problems.

### SUMMARY OF THE INVENTION

One object of the present invention is to overcome the precited drawbacks of the state of the art and provide a method for facilitating the analysis of a network event report in a communication network **characterized in that** said method comprising the steps of:
- detecting an occurrence of said network event,
   in response to an occurrence of said network event,
- determining additional information useful to determine network event origin,
- adding said useful additional information in said report.

Preferably, said network event is associated with a Quality of Service (QoS) deficiency.

Advantageously, the creation of the report is initiated without any causal user input after the occurrence of the network event.

Additionally, said method comprises the step of :
- displaying said report.

Alternatively, the step of detecting an occurrence of said network event comprises at least one comparison steps out of the following list:
- comparing Quality of Service (QoS) indicators values to reference values and/or,
- comparing Quality of Service (QoS) indicators values at different times and/or,
- comparing Quality of Service (QoS) indicators values at different locations.

Preferably, the step of selecting additional information useful to determine network event origin comprises at least one step out of the following list:
- adding spatial scope adjustment information and/or,
- adding temporal scope adjustment information and/or,
- adding functional scope adjustment information.

Advantageously, the step of adding spatial scope adjustment information comprises at least one step out of the following list:
- focusing on data from a limited part of the network and/or,
- adding data within a region of the network and/or,
- adding data from different network elements,
- comparing different regions of the network having common properties.

Preferably, the step of adding temporal scope adjustment information comprises at least one step out of the following list:
- adding equivalent data from other periods and/or,
- adding data with different periodicity,
- adding data related with an event having occurred on the network.

Alternatively, the step of adding functional scope adjustment information comprises at least one step out of the following list:
- adding data from different network elements and/or,
- adding data describing communications on the network,
- separating data coming from different functional elements.

Moreover, the method is applied to a standard or a multi-standard network.

Furthermore, the present invention refers to a report manager unit of a communication network comprising at least one processing means adapted to perform the following steps:
- detecting an occurrence of a network event,
   in response to an occurrence of said network event,
- determining additional information useful to determine network event origin,
- adding automatically said useful additional information in network event report.

Advantageously, the network event is associated with a Quality of Service (QoS) deficiency.

Preferably, the creation of said report is initiated without any causal user input after the occurrence of the network event.

Alternatively, said report manager unit is capable of communicating with network functional elements to require additional traffic data or any information related to the communications on the network.

### BRIEF DESCRIPTION OF THE DRAWINGS

FIG.**1** is a diagram of a communication network;
FIG.**2** is a graph representing the number of drop calls in the network during a week;
FIG.**3** is another graph representing the number of drop calls in the network during a week;
FIG.**4** is a graph representing the temporal scope adjustment information according to the invention;
FIG.**5** is a graph representing the spatial scope adjustment information according to the invention;
FIG.**6** is a graph representing the functional scope adjustment information according to the invention;

### DETAILED DESCRIPTION OF THE INVENTION

As used herein, the term "Quality of service (QoS)" refers to a broad collection of networking technologies and techniques. The goal of the QoS is to provide guarantees on the ability of a network to deliver predictable results. Elements of network performance within the scope of QoS comprise availability, bandwidth, latency and error rate.

As used herein, the term "automatically" defines an action that does not need user input to trigger it. Thus, if the action is done automatically, user input is not required thereby alleviating the user of work that would otherwise be required to initiate or create the report.

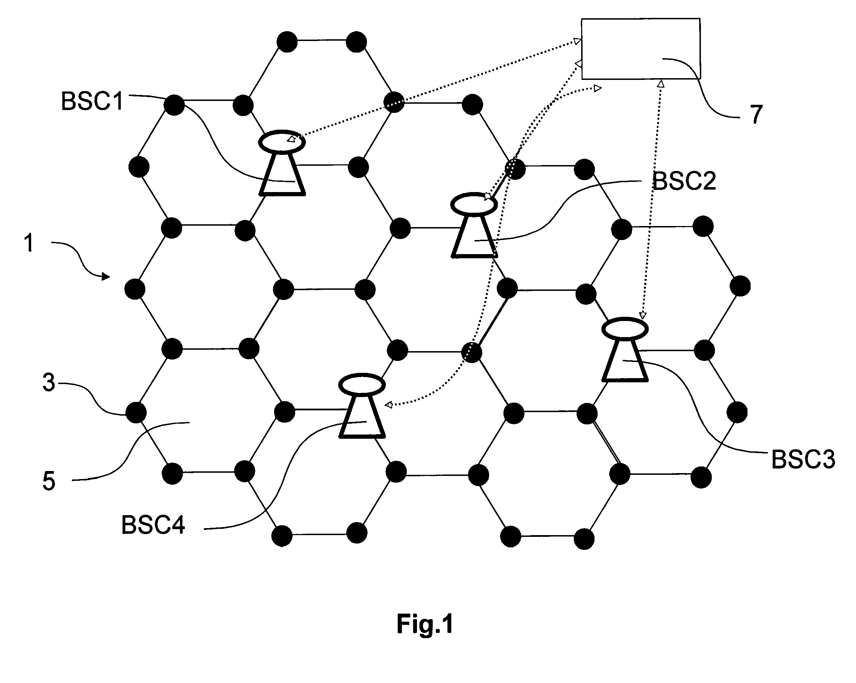

The present invention offers a way to ease the analysis of the Quality of Service (QoS) and therefore contribute to the improvement of said QoS. Measurements of the QoS parameters are achieved on existing network links or network elements and can be analyzed through QoS reports. Tools generating QoS reports already exist in the state of the art. With such tools QoS reports are launched either periodically or when an indicator reach a triggering value or manually by the user. The present invention offers an enhancement of such tools by adapting automatically the information displayed in the report depending on the measured values of the different parameters. It refers to a report manager able to determine automatically which information is relevant to a QoS report and to add relevant information to this QoS report.
To better understand the present invention, Fig.1 represents a mobile communication network 1. Said network comprises base stations 3 ensuring signal transmission to customers terminals located in their sector. The network 1 can be divided into cells 5 formed by a few base stations 3. Traffic is controlled by base station controllers (BSCx with x=1 to 4). Traffic information is sent to a report manager unit 7 in order to build up QoS reports.
It has to be noted that a base station controller generally controls several cells. The network of the present example comprises four base station controllers (BSCx with x=1 to 4). In order to follow up network traffic, periodical QoS reports are executed by the report manager unit 7. The time period value is defined by an operator and can be modified in function of the traffic if it is necessary. This report comprises QoS indicators values such as call drop or congestion rate for example. Said values can be presented in any kind of chart, graph or diagram forms (2D graphs, 3D graphs, bar chart, circle chart, tabular chart...). QoS reports are composed of views, each view representing a tabular and/or graphical representation of one or several QoS indicators on one or several network objects or on an aggregation of objects. It could represent the evolution or the distribution of QoS indicator values and/or parameter values.
The idea of the present invention is to add automatically more specific details in the report in case of abnormal values of a QoS indicator in order to provide elements allowing to explain these abnormal values. It can be seen as a refinement or an analysis of raw data measured on the network.

To detect said abnormal values, criteria are predefined by a network operator or predefined in the report manager. Different types of criteria can be defined such as:
- Comparison of the indicators values to a predetermined reference value (threshold),
- Comparison of the values of two different indicators/parameters,
- Comparison to previously recorded values,
- Comparison to values from different locations,
- Comparison of predicted values (based on current values) with thresholds or other indicator values (predicted or not),
- A given rule is checked or unchecked,

Any criteria can be applied or disabled according to a given condition, for example if the number of requested connections is below a given value then a first set of criteria is applied whereas if the number of requested connections is above said given value another set of criteria is applied. Validation of a criterion trigs the building of additional views for the report. In order to avoid the overload of the report, a maximum number of views can be set and a decision tree can be defined to determine according to different combinations of criteria which views have to be added in priority.

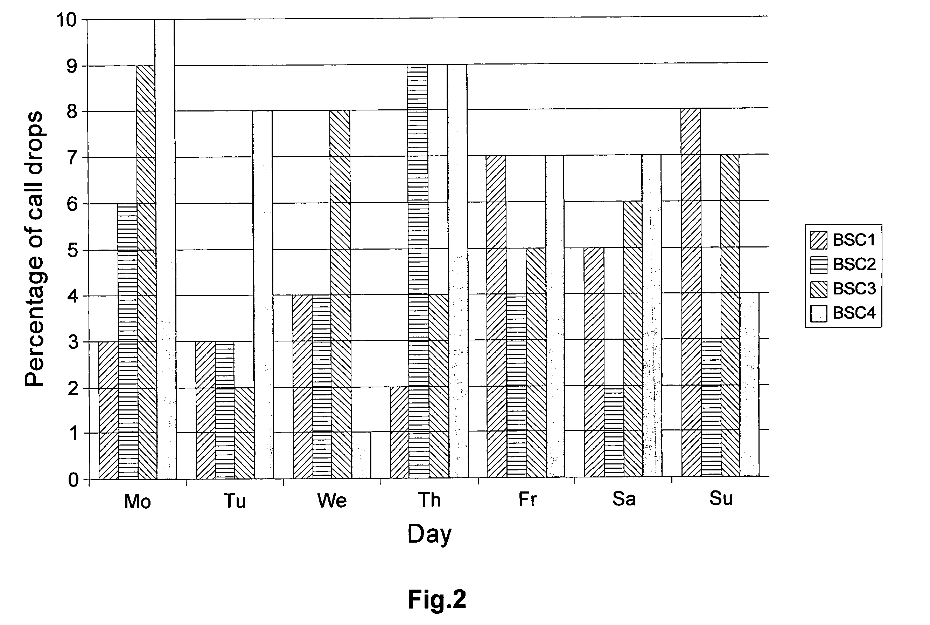

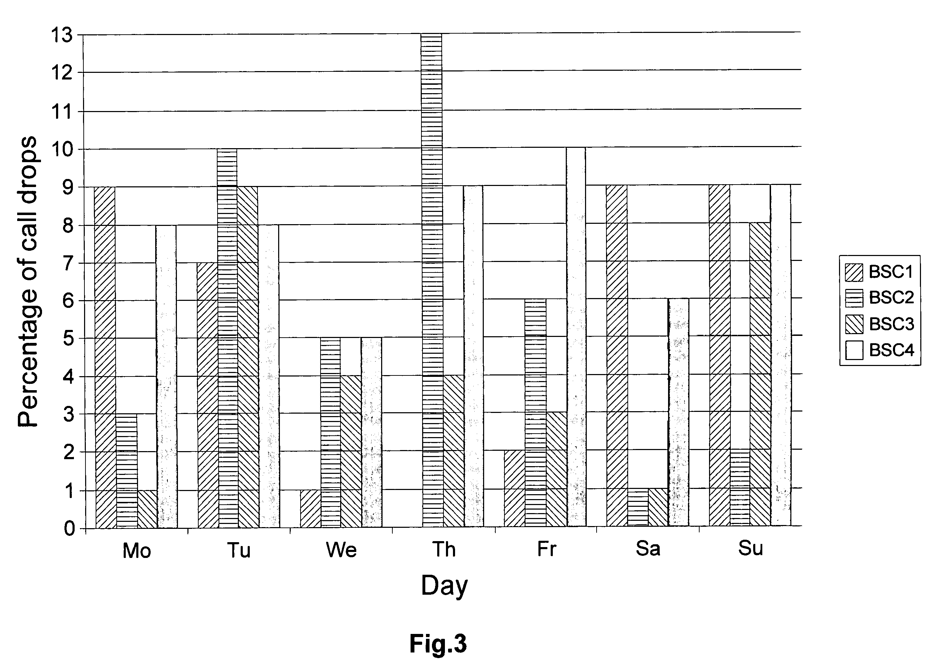

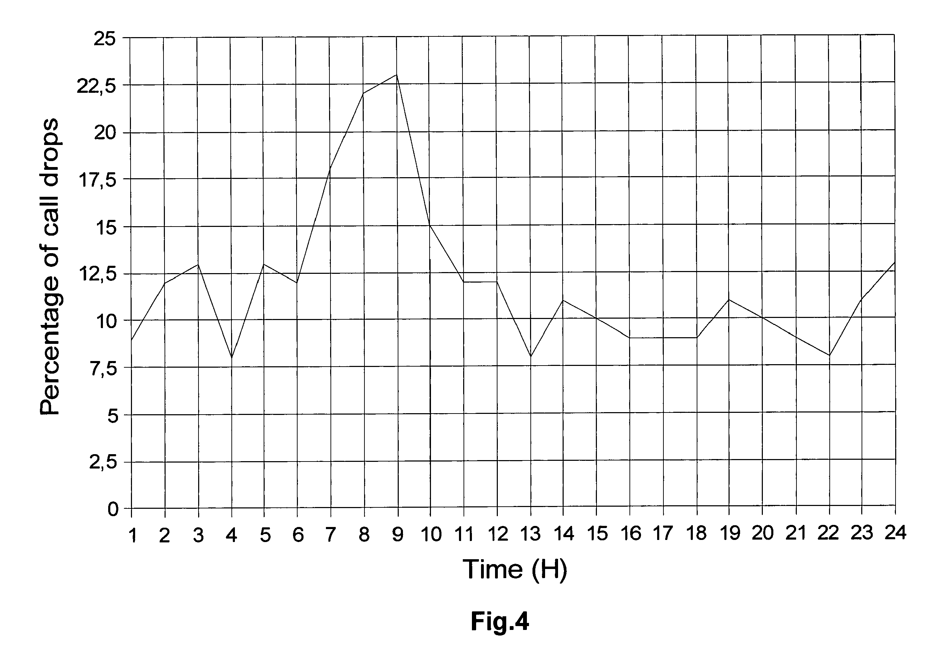

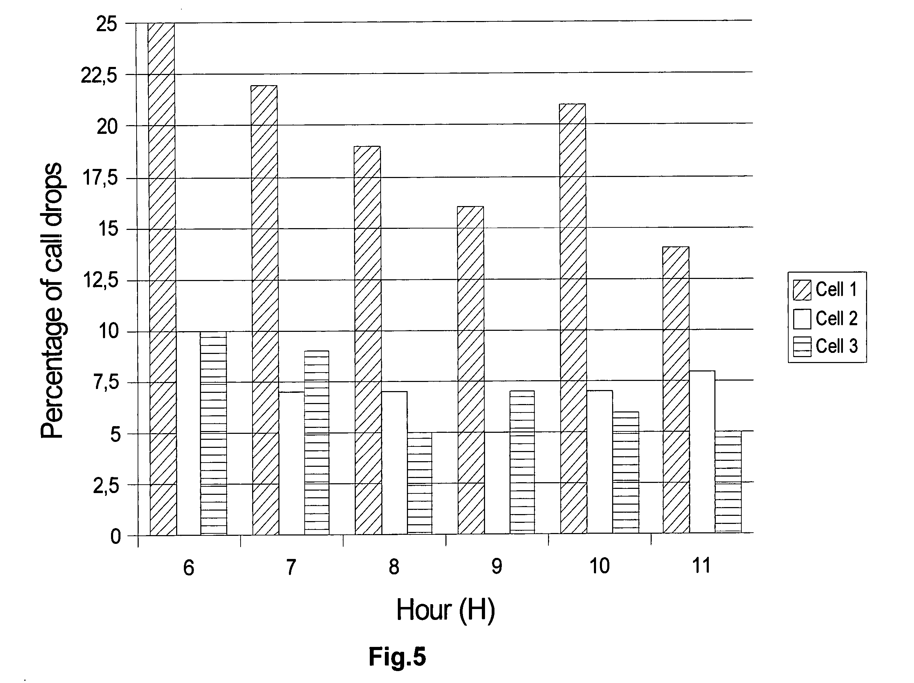

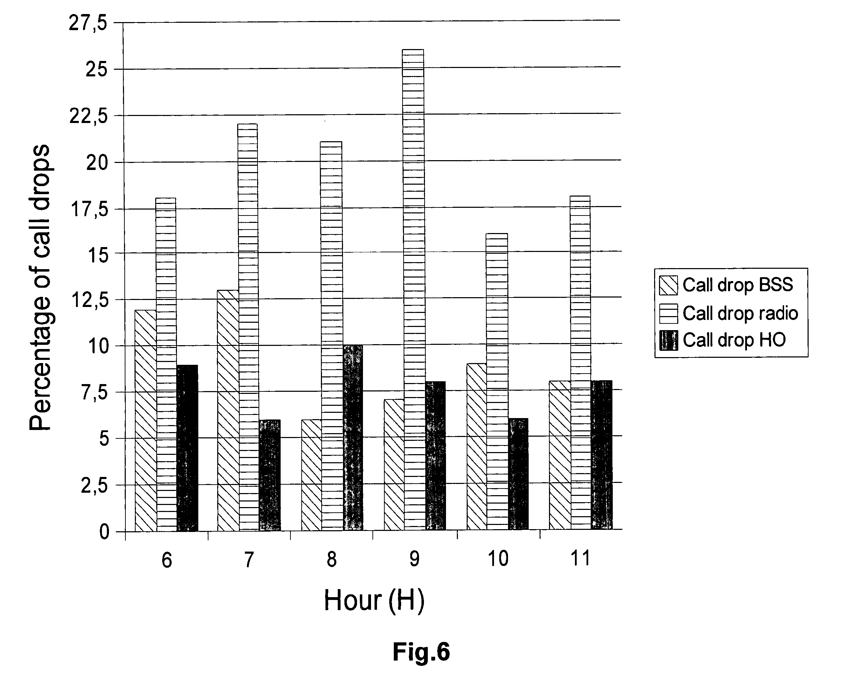

Fig.2 and Fig.3 represent two possible bar charts of a weekly report concerning the network of Fig.1 representing the number of call drops for each base station controllers (BSCx with x=1 to 4) and for each day of the week. A threshold number of acceptable call drops is set to 10%. On Fig.2, this criterion is respected, as a consequence no additional details are provided automatically on the QoS report. On the other hand, on Fig. 3, the value corresponding to BSC2 on Thursday is above the threshold value of 10%. In such case, the report manager inserts automatically additional views to the report to provide elements explaining such value.
The additional elements can be divided in different types corresponding to different adjustments:
- A temporal scope adjustment the additional values or data correspond to values having a different period or a different periodicity or to values corresponding to a date/period when a given event has occurred on the network or to the date/period/periodicity when one or several given values have been measured on the network. Fig.4 represents such adjustment in the case presented on Fig. 3. It shows a temporal roll-up of the number of call drops corresponding to the problematic value of Fig.3. The periodicity between two consecutive values is one hour instead of one day previously. This graph allows defining more precisely the period during which a possible technical problem has occurred. From Fig.4, we notice that the problematic period corresponds to the period from 6 to 11 o'clock.
- Spatial scope adjustment; the additional data correspond to different: network elements (topological adjustment) or different areas (geographical adjustment). Fig. 5 represents such spatial adjustment on the time frame selected by the temporal adjustment of Fig.4. Instead of showing the value corresponding to the base station controllers, the values corresponding to the different cells of BSC2, which is the base station controller presenting the problematic value, are displayed. Thus, this new view allows determining that the problem is concentrated only on a limited area of the network, cell 1 in the present example.
- Functional scope adjustment the additional data correspond to other indicators or parameters having the same temporal and spatial adjustment. Fig.6 represents a functional adjustment corresponding to cell 2 and the period from 6 to 11 of our example. The graph shows the call drop values for three different types of signals; radio signals corresponding to transmission between a terminal and a base station, Base Station Subsystem (BSS) signals corresponding to signals between a base station and a base station controller and HandOver (HO) signals corresponding to the transition between two emission channels. From this graph, we notice that
   the radio signals are mainly responsible for the bad call drop.

On this example, the additional information allow the operator to easily and rapidly determine that the possible technical problem occurred on the radio signals transmitted in cell 2 between 6 and 11 o'clock on Thursday.

The functions of the various elements of the QoS report manager unit may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Moreover, to increase reactivity, in addition to the periodical QoS reports, triggering of warning QoS reports can be set up if a condition is met. For example, if the percentage of call drops reaches 20%, a QoS report procedure is launched. In the same way, the views displayed in the warning report arc determined by the automatic report manager.
It has also to be noted that the present invention can be used with any network using QoS evaluation, whatever the network standard (WIMAX, 3G LTE, UMTS, GSM, CPRS, EDGE...).

## Claims

1. Method for facilitating the analysis of a network event report in a communication network **characterized in that** said method comprising the steps of:
- detecting an occurrence of said network event,
in response to an occurrence of said network event,
determining additional information useful to determine network event origin,
- adding said useful additional information in said report.

2. Method for facilitating the analysis of a network event report in a communication network in accordance with claim 1 wherein said network event is associated with a Quality of Service (QoS) deficiency.

3. Method for facilitating the analysis of a network event report in a communication network in accordance with claim 1 or 2 wherein the creation of the report is initiated without any causal user input after the occurrence of the network event.

4. Method for facilitating the analysis of a network event report in a communication network in accordance with one of the previous claims wherein said method comprises the step of :
- displaying said report.

5. Method for facilitating the analysis of a network event report in a communication network in accordance with one of the previous claims **characterised in that** the step of detecting an occurrence of said network event comprises at least one comparison steps out of the following list:
- comparing Quality of Service (QoS) indicators values to reference values and/or,
- comparing Quality of Service (QoS) indicators values at different times and/or,
- comparing Quality of Service (QoS) indicators values at different locations.

6. Method for facilitating the analysis of a network event report in a communication network in accordance with one of the previous claims **characterised in that** the step of selecting additional information useful to determine network event origin comprises at least one step out of the following list:
- adding spatial scope adjustment information and/or,
- adding temporal scope adjustment information and/or,
- adding functional scope adjustment information.

7. Method for facilitating the analysis of a network event report in a communication network in accordance with claim 6 **characterized in that** the step of adding spatial scope adjustment information comprises at least one step out of the following list:
- focusing on data from a limited part of the network and/or,
- adding data within a region of the network and/or,
- adding data from different network elements,
- comparing different regions of the network having common properties.

8. Method for facilitating the analysis of a network event report in a communication network in accordance with claim 6 or 7 **characterized in that** the step of adding temporal scope adjustment information comprises at least one step out of the following list:
- adding equivalent data from other periods and/or,
- adding data with different periodicity,
- adding data related with an event having occurred on the network.

9. Method for facilitating the analysis of a network event report in a communication network in accordance with claim 6, 7 or 8 **characterized in that** the step of adding functional scope adjustment information comprises at least one step out of the following list:
- adding data from different network elements and/or,
- adding data describing communications on the network,
- separating data coming from different functional elements.

10. Method for facilitating the analysis of a network event report in a communication network in accordance with one of the previous claims **characterized in that** the method is applied to a standard or a multi-standard network.

11. Report manager unit (7) of a communication network comprising at least one processing means adapted to perform the following steps:
- detecting an occurrence of a network event,
in response to an occurrence of said network event,
- determining additional information useful to determine network event origin,
- adding automatically said useful additional information in a network event report.

12. Report manager unit (7) of a communication network in accordance with claim 11 wherein the network event is associated with a Quality of Service (QoS) deficiency.

13. Report manager unit (7) of a communication network in accordance with claim 11 or 12 wherein the creation of said report is initiated without any causal user input after the occurrence of the network event.

14. Report manager unit (7) of a communication network in accordance with claims 11, 12 or 13 **characterized in that** said report manager unit is capable of communicating with network functional elements to require additional traffic data or any information related to the communications on the network.
